# FASCICULE DE BREVET EUROPEEN

(11) **EP 0 833 582 B1**
(45) Date de publication et mention de la délivrance du brevet: **07.06.2000**
(21) Numéro de dépôt: 96920892.5
(22) Date de dépôt: 03.06.1996
(51) Int. Cl.: A47J 31/46

(54) **VANNE DE COMMANDE A PLUSIEURS VOIES POUR MACHINE A BOISSON CHAUDE, EN PARTICULIER MACHINE A CAFE, EQUIPEE D'UNE CHAUDIERE BASSE PRESSION**
MEHRWEGE-REGELVENTIL FÜR EINE HEISSGETRÄNKEMASCHINE, INSBESONDERE EINE KAFFEEMASCHINE MIT EINEM ERHITZER UNTER NIEDRIGEM DRUCK
MULTI-PATH CONTROL VALVE FOR HOT BEVERAGE MACHINE, PARTICULARLY A COFFEE MACHINE, PROVIDED WITH A LOW PRESSURE BOILER

(30) Priorité: 02.06.1995 FR 9506796
(43) Date de publication de la demande: 08.04.1998
(73) Titulaire: SEB S.A., 69130 Ecully (FR)
(72) Inventeur: SMIT, Robert, F-65500 Lourdes (FR); LAFOND, Jean-Marie, F-65000 Tarbes (FR); ROUCHES, Alexandre, F-65000 Tarbes (FR); FIEDOS, Hervé, F-65310 Odos (FR)
(86) Numéro de dépôt international: FR9600835
(87) Numéro de publication internationale: WO9638078

(56) Documents cités:
- EP-A- 0 217 211
- EP-A- 0 307 497
- CH-A- 451 628
- GB-A- 2 188 399

## Description

### DOMAINE TECHNIQUE

La présente invention se rapporte au domaine technique général des dispositifs de préparation de boissons chaudes, telles que des machines à café, et plus particulièrement au domaine des vannes de commande à plusieurs voies susceptibles de commander sélectivement les différentes fonctions qui peuvent être remplies par le moyen de chauffe monté dans la machine à boisson chaude.

La présente invention concerne une vanne de commande à plusieurs voies pour commander sélectivement les fonctions eau chaude/vapeur d'une machine à boisson chaude, telle qu'une machine à café, équipée d'un moyen de chauffe ou d'une chaudière basse pression.

La présente invention concerne également une machine à boisson chaude, telle qu'une machine à café, équipée d'une telle vanne de commande.

### TECHNIQUE ANTERIEURE

Dans la plupart des dispositifs de préparation de boissons chaudes du type mentionné précédemment, il est bien évidemment déjà connu d'avoir recours à des vannes de commande à plusieurs voies.

Ces vannes servent à commander, par l'intermédiaire d'un organe de commande susceptible d'être actionné manuellement par l'utilisateur, différentes fonctions résultant de la mise en relation de différents circuits internes à la machine et liés à la chaudière.

Un exemple de telles fonctions, est la capacité pour la machine à boisson chaude, grâce à la vanne de commande à plusieurs voies, de fournir sélectivement, de la vapeur, par exemple pour réchauffer un liquide, ou tout simplement de l'eau chaude, pour assurer la réalisation de la boisson chaude.

Une vanne de commande à plusieurs voies pour commander sélectivement les fonctions eau chaude / vapeur d'une machine à boisson chaude, telle qu'une machine à café, ladite vanne comprenant un corps principal avec un orifice d'entrée susceptible de communiquer avec la chaudière et deux orifices de sortie, respectivement d'eau chaude et de vapeur, est connue du document EP-A-307 497.

Dans le cas spécifique de l'utilisation de machines à boisson chaude équipées d'une chaudière basse pression, c'est-à-dire fonctionnant à une pression inférieure à 1 bar et par exemple de l'ordre de 0,5 à 0,6 bars, la chaudière est supposée assumer une double fonction, à savoir celle bien évidemment de chauffer l'eau, ainsi que celle d'assurer la propulsion de l'eau dans les circuits internes de la machine vers la mouture de café.

En raison de l'utilisation d'une chaudière basse pression, il est nécessaire, pour assurer un cheminement régulier de l'eau dans les circuits de la machine, d'avoir recours à des sections de passages de l'eau qui sont relativement faibles.

Dans la plupart des systèmes connus à ce jour et utilisant des vannes de commande à plusieurs voies, en combinaison avec des machines à boisson chaude équipées d'une chaudière basse pression, il s'avère que le fonctionnement général de ces machines n'est pas satisfaisant. En effet, il a été constaté, avec les vannes de commande actuelles, que la fonction de production d'eau chaude n'était pas assumée de manière satisfaisante, en raison de l'antagonisme entre la basse pression générée par la chaudière et sa fonction de thermo-siphon. On a également constaté un fonctionnement irrégulier de la chaudière, et la formation d'une certaine proportion de vapeur au sein de l'eau chaude produite. En conséquence, la fonction production d'eau chaude n'est pas assurée de manière satisfaisante, le fonctionnement de telles machines à boisson chaude s'avérant par ailleurs bruyant.

### EXPOSE DE L'INVENTION

L'objet de l'invention vise en conséquence à remédier aux différents problèmes mentionnés précédemment, et en particulier à fournir une vanne de commande à plusieurs voies susceptible d'assurer correctement les fonctions qui lui sont dévolues, et en particulier les fonctions de production d'eau chaude d'une part et de vapeur d'autre part, et ce sans générer de pertes de charge sensibles dans le circuit de la machine à boisson chaude dans laquelle la vanne est montée.

Un autre objet de l'invention vise à fournir une vanne de commande dont le fonctionnement global est amélioré, et qui permet un fonctionnement en toute sécurité, notamment en cas de surpression accidentelle.

Les objets assignés à l'invention sont atteints à l'aide d'une vanne de commande à plusieurs voies pour commander sélectivement les fonctions eau chaude / vapeur d'une machine à boisson chaude, telle qu'une machine à café, équipée d'une chaudière basse pression, ladite vanne comprenant un corps principal avec un orifice d'entrée susceptible de communiquer avec la chaudière et deux orifices de sortie, respectivement d'eau chaude et de vapeur, caractérisée en ce qu'elle comprend également un doigt de distribution, monté mobile dans le corps principal et susceptible, par l'intermédiaire d'un organe de commande auquel il est relié, de mettre en relation à travers un circuit formé entre le corps principal et le doigt, l'orifice d'entrée avec l'un ou l'autre des orifices de sortie, la portion de circuit reliant l'orifice d'entrée à l'orifice de sortie eau chaude présentant sur toute sa longueur une section constante sensiblement égale à celle de l'orifice d'entrée et à l'orifice d'eau chaude.

### DESCRIPTION SOMMAIRE DES DESSINS

D'autres particularités et avantages de l'invention apparaîtront plus en détail, à la lecture de la description faite ci-après, en référence aux dessins annexés, donnés à titre d'exemples illustratifs et non limitatifs, dans lesquels :
- Les figures 1, 2 et 3 montrent, selon des coupes transversales longitudinales, une vanne de commande à plusieurs voies conforme à l'invention et correspondant respectivement à une position de production d'eau chaude, à une position de recyclage, et à une position de production de vapeur.
- La figure 4 montre selon une vue en perspective éclatée, une variante de réalisation d'une vanne conforme à l'invention, dans laquelle le système anti-siphonnage est constitué d'une languette déformable.
- La figure 5 illustre une machine à café dans laquelle une vanne de commande conforme à l'invention peut être montée.

### MEILLEURE MANIERE DE REALISER L'INVENTION

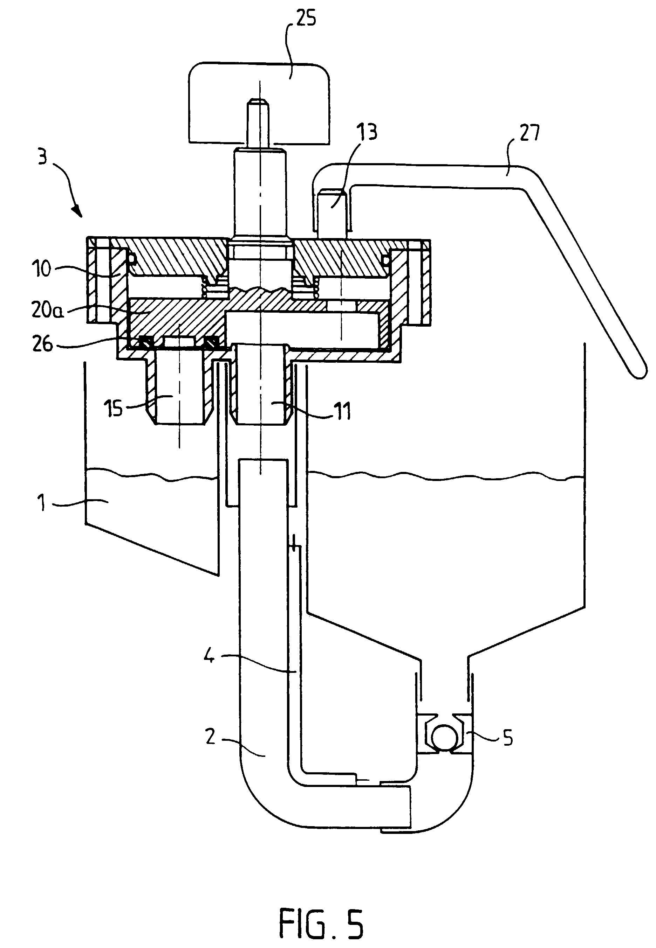

Tel que cela est montré par exemple à la figure 5, de manière schématique, la vanne de commande à plusieurs voies conforme à l'invention est destinée à être montée sur une machine à boisson chaude telle qu'une machine à café.

La figure 5 montre de manière schématique, l'incorporation d'une telle vanne de commande dans une machine à café de type connu en soi et comportant un réservoir de liquide 1 relié par une conduite 2 à une vanne de commande à plusieurs voies 3. Le moyen de chauffe 4 formant la chaudière de l'appareil est constitué par une résistance chauffante de type blindée en relation thermique avec la conduite 2 de manière à pouvoir chauffer l'eau et assurer simultanément sa circulation.

De manière préférentielle, la résistance chauffante présente une forme caractéristique en L, et peut être considérée comme une chaudière basse pression, à même de générer dans le système une pression inférieure à 1 bar et de préférence comprise entre 0,5 et 0,6 bars.

De manière classique, la conduite 2 comporte un clapet anti-retour 5.

Dans ce type de dispositif bien connu de l'art antérieur, la résistance chauffante 4 assume donc simultanément une fonction de pompe et une fonction de chauffe.

La vanne de commande 3 conforme à l'invention, est une vanne à plusieurs voies susceptible de commander sélectivement les fonctions eau chaude/vapeur, d'une machine à boisson chaude, telle qu'une machine à café, équipée d'une chaudière basse pression.

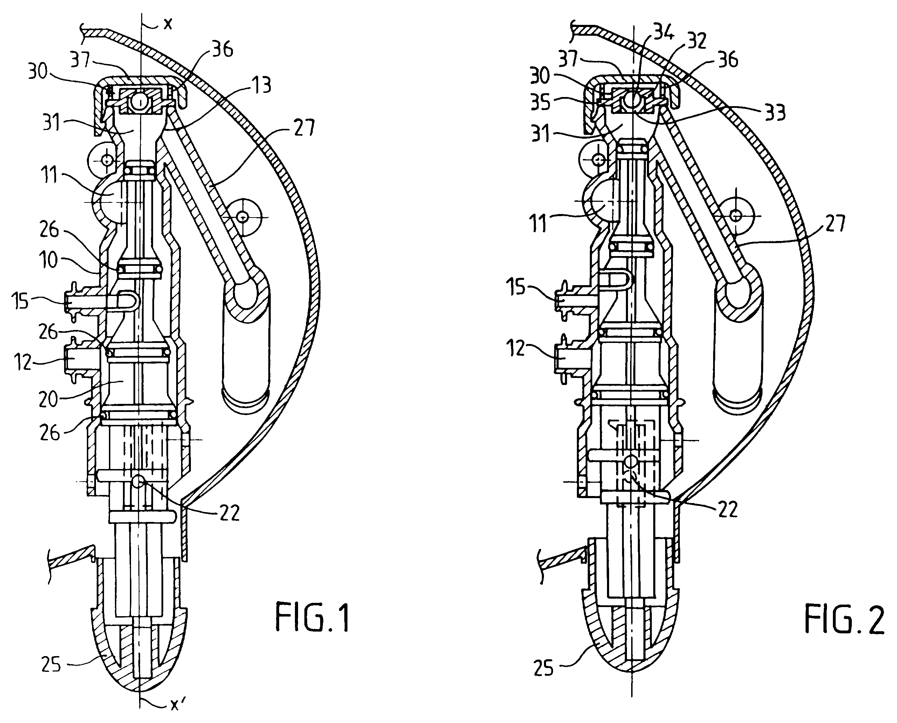

Tel que cela est montré aux figures 1 à 3, représentant une version préférentielle de la vanne de commande 3 conforme à l'invention, cette dernière comprend un corps principal 10 se présentant sous la forme d'un corps creux de forme sensiblement oblongue et d'axe de symétrie x-x'. Le corps principal 10 est pourvu d'un orifice d'entrée 11 susceptible, par l'intermédiaire d'une conduite, telle que la conduite 2 (figure 5), de communiquer avec la chaudière de l'appareil à boisson chaude, en l'occurrence la résistance blindée 4 par exemple.

Le corps principal 10 comporte également deux orifices de sortie respectivement d'eau chaude 12 et de vapeur 13, situés de part et d'autre de l'orifice d'entrée 11 et à distance de ce dernier.

La vanne de commande 3 à plusieurs voies conforme à l'invention comporte également un doigt de distribution 20 se présentant sous la forme d'une tige comportant plusieurs sections de profils et de diamètres adaptés pour permettre suivant la position axiale de la tige dans le corps principal 10, le passage sélectif du fluide à partir de l'orifice d'entrée 11 vers l'un ou l'autre des orifices de sortie 12, 13.

Le doigt de distribution 20 est monté mobile dans le corps principal 10 et est susceptible, par l'intermédiaire d'un organe de commande auquel il est relié, de mettre en relation à travers un circuit formé entre le corps principal 10 et les faces externes du doigt de distribution 20, l'orifice d'entrée 11 avec l'un ou l'autre des orifices de sortie 12, 13.

Selon une caractéristique importante de l'invention, la portion de circuit reliant l'orifice d'entrée 11 à l'orifice de sortie d'eau chaude 12 présente sur toute sa longueur une section constante, qui est sensiblement égale à la section de l'orifice d'entrée 11.

Selon cette caractéristique, l'eau chaude qui a été réchauffée par l'intermédiaire de la résistance de chauffe 4 dans le conduit 2 et qui arrive dans la vanne de commande 3 par l'orifice d'entrée 11 ne subit aucune restriction au sein même de la vanne puisque l'eau chaude s'écoule à travers une portion de circuit dont la section est sensiblement identique à celle de la section d'entrée.

De cette façon, le flux d'eau chaude n'est pas perturbé alors même que la pression de fonctionnement est relativement basse, l'absence de perte de charge contribuant à limiter la formation de vapeur dans l'eau.

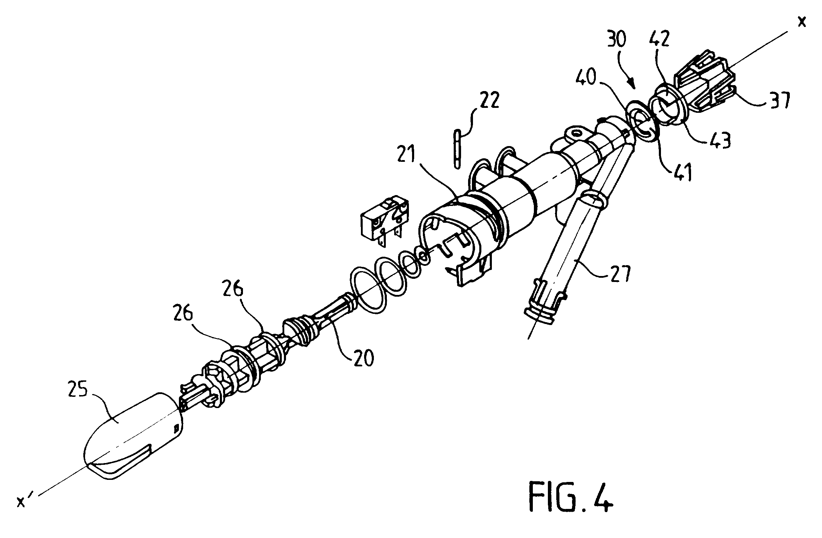

De manière connue, le déplacement du doigt de distribution 20 est obtenu à l'aide d'un mouvement combinant une rotation du doigt autour de l'axe x-x', avec un déplacement axial selon le même axe. Un tel déplacement peut être obtenu par un ensemble de commandes associant une lumière 21 (figure 4) ménagée dans l'épaisseur de l'enveloppe du corps principal 10 pour former une rampe de glissement d'une part, et un téton 22 solidaire du doigt de distribution 20 et destiné à être inséré dans la lumière 21 pour se déplacer dans cette dernière d'autre part. Le doigt de distribution 20 forme ainsi un coulisseau monté mobile axialement par rotation.

L'organe de commande du déplacement du doigt de distribution 20 est avantageusement formé par un bouton 25 solidaire d'une extrémité du doigt de distribution 20.

Selon une version particulièrement avantageuse de l'invention, le corps principal 10 comporte également une sortie de recyclage 15 située entre l'orifice d'entrée 11 et l'orifice de sortie d'eau chaude 12 permettant, par l'intermédiaire du doigt de distribution 20, le passage du liquide de l'orifice d'entrée 11 vers le réservoir 1 de la machine à boisson.

Le doigt de distribution 20 comporte une série de joints d'étanchéité toriques 26 destinés à assurer en combinaison avec les formes spécifiques du doigt de distribution 20, l'étanchéité du fonctionnement de la vanne.

La vanne conforme à l'invention comporte également un tube 27 de sortie de vapeur prolongeant l'orifice 13 de sortie de vapeur.

Selon la version préférentielle de l'invention montrée aux figures 1 à 4, la vanne conforme à l'invention est plus particulièrement destinée à être intégrée en position sensiblement horizontale sur la machine à boisson. Elle comporte également un système anti-siphonnage 30 monté à la partie supérieure de la vanne, opposée au bouton de commande 25, ledit système anti-siphonnage 30 étant monté dans une chambre supérieure 31 ménagée dans le corps principal 10 et donc soumise à la pression régnant dans la vanne 3.

Selon une variante de réalisation, le système anti-siphonnage 30 comprend une soupape de sécurité 32 montée dans la chambre 31 au voisinage de l'orifice 13 de sortie de vapeur.

La soupape de sécurité 32 comporte une chambre de réception 33 pour une bille 34, et est entourée d'une collerette 35. La soupape de sécurité 32 repose par la collerette 35 contre l'extrémité supérieure du corps principal 10 et est montée élastiquement mobile contre au moins un ressort 36 interposé entre la collerette 35 et un capuchon de fermeture 37. En position de repos, la soupape 32 empêche donc la mise à l'air libre de la vanne en raison de la force exercée par le ressort 36.

La soupape de sécurité 32 est en conséquence montée élastiquement mobile contre le ressort 36 et est associée à la bille 34 elle même montée librement déplaçable sous l'effet de la pression régnant dans le corps principal 10 dans la chambre 33 qui est elle-même pourvue d'un orifice d'échappement de fluide.

Le fonctionnement de la variante préférentielle de la vanne conforme à l'invention montré aux figures 1 à 4 est le suivant :

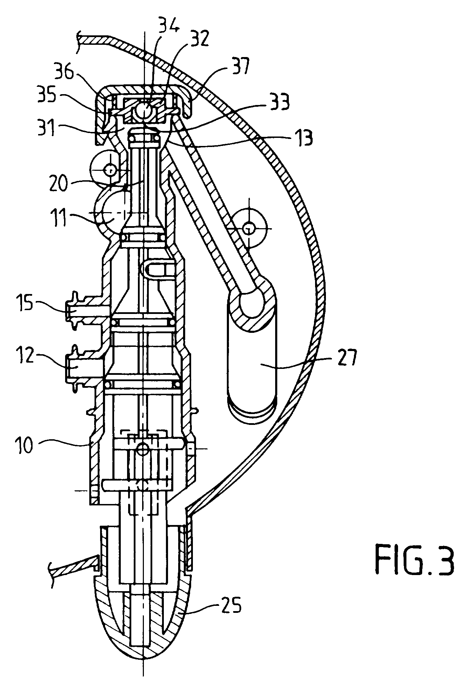

Le consommateur amène par rotation et translation, en utilisant le bouton de commande 25, le doigt de distribution 20 dans la position sélectionnée, à savoir la position dite eau chaude, correspondant à la figure 1, la position dite de recyclage, correspondant à la figure 2, ou la position dite de vapeur, correspondant à la figure 3.

Dans la position correspondant à la figure 1, l'eau chaude peut passer directement de l'orifice d'entrée 11 à l'orifice de sortie 12 en suivant le circuit fermé interne à section constante de la vanne.

Selon la position de la vanne montrée à la figure 2, l'eau arrivant par l'orifice d'entrée 11 est canalisée vers la sortie de recyclage 15 et peut ainsi retourner au réservoir 1. Selon la position de la vanne montrée à la figure 3, la vapeur peut en conséquence passer de l'orifice d'entrée 11 vers l'orifice de sortie de vapeur 13. Dans cette position, le dispositif anti-siphonnage 30 est inactif, puisqu'en raison de la pression interne régnant dans la vanne, la bille 34 obture l'orifice de la chambre 33 empêchant une mise à l'air libre du système.

Si pour une raison quelconque, telle que par exemple une coupure inopinée de l'alimentation électrique de la chaudière, et alors même que le consommateur maintient le tube de vapeur 27 immergé dans un liquide, le niveau de pression du système baisse, une dépression est alors susceptible de se créer. Une telle situation risque de provoquer une aspiration du liquide se trouvant dans le réservoir 1. La présence d'une bille anti-siphonnage 34 dans le système permet de lutter contre ce phénomène en permettant une mise à l'air libre du système, puisque la bille anti-siphonnage 34 peut alors tomber et créer une mise à l'air libre du système en évitant tout risque de siphonnage de l'eau.

Le montage élastique du système anti-siphonnage 30 permet également en cas de surpression, une mise à l'air libre du système grâce au montage élastique de la soupape de sécurité 32. Le système anti-siphonnage 30 peut être considéré comme un système de sécurité double fonction.

Selon une variante de réalisation du système anti-siphonnage, montré à la figure 4, ce dernier peut être constitué d'une languette déformable 40 ménagée sous la forme d'une découpe en U dans un disque 41 réalisé par exemple en matériau plastique. Selon cette variante de réalisation, la languette 40 est déformable sous l'effet de la pression régnant dans le corps principal 10, et, est enfilée sur une nervure 42 provenant d'une pièce annulaire 43 sur laquelle vient reposer ladite languette 40.

### POSSIBILITES D'APPLICATION INDUSTRIELLE

L'invention trouve son application dans des dispositifs de préparation de boissons chaudes.

## Revendications

1. Vanne de commande (3) à plusieurs voies pour commander sélectivement les fonctions eau chaude / vapeur d'une machine à boisson chaude, telle qu'une machine à café; équipée d'une chaudière (4) basse pression, ladite vanne comprenant un corps principal (10) avec un orifice d'entrée (11) susceptible de communiquer avec la chaudière (4) et deux orifices de sortie (12,13), respectivement d'eau chaude et de vapeur, caractérisée en ce qu'elle comprend également un doigt de distribution (20), monté mobile dans le corps principal (10) et susceptible, par l'intermédiaire d'un organe de commande (25) auquel il est relié, de mettre en relation à travers un circuit formé entre le corps principal (10) et le doigt (20), l'orifice d'entrée (11) avec l'un ou l'autre des orifices de sortie (12,13), la portion de circuit reliant l'orifice d'entrée (11) à l'orifice de sortie eau chaude (12) présentant sur toute sa longueur une section constante sensiblement égale à celle de l'orifice d'entrée (11) et à l'orifice d'eau chaude (12).

2. Vanne selon la revendication 1 caractérisée en ce que le corps principal (10) comporte une sortie de recyclage (15) permettant, par l'intermédiaire du doigt de distribution (20), le passage du liquide de l'orifice d'entrée (11) vers le réservoir (1) de la machine à boisson.

3. Vanne selon l'une des revendications 1 ou 2, caractérisée en ce que le doigt de distribution (20) est un coulisseau monté mobile axialement par rotation dans le corps principal.

4. Vanne selon l'une des revendications 1 à 3, caractérisée en ce que l'organe de commande (25) est un bouton solidaire d'une extrémité du doigt de distribution (20).

5. Vanne selon l'une des revendications 1 à 4, caractérisée en ce qu'elle comporte un système anti-siphonnage (30).

6. Vanne selon la revendication 5, caractérisée en ce que le système anti-siphonnage comprend une soupape de sécurité (32) montée dans le corps principal (10) au voisinage de l'orifice de sortie de vapeur (13), ladite soupape faisant également office de soupape de sécurité en cas de surpression.

7. Vanne selon la revendication 6, caractérisée en ce que la soupape (32) est montée élastiquement mobile contre un ressort (36) pour assurer la sécurité en cas de surpression et est associée à une bille (34) montée librement déplaçable sous l'effet de la pression régnant dans le corps principal (10) dans une chambre (33) ménagée dans la soupape (32), laquelle est pourvue d'un orifice d'échappement.

8. Vanne selon la revendication 6, caractérisée en ce que la soupape (32) est formée par une languette déformable (40) sous l'effet de la pression régnant dans le corps principal.

9. Machine à boisson chaude en particulier machine à café, équipée d'une vanne conforme à l'une des revendications 1 à 8.

## Patentansprüche

1. Mehrwege-Steuerventil (3) zur selektiven Steuerung der Funktionen Heißwasser/Dampf einer Heißgetränkemaschine wie einer Kaffeemaschine, die mit einem Niederdruck-Erhitzer (4) ausgestattet ist, wobei das Ventil einen Hauptkörper (10) mit einer mit dem Erhitzer (4) verbindbaren Einlaßöffnung (11) und zwei Auslaßöffnungen (12, 13) für das heiße Wasser bzw. den Dampf aufweist, dadurch gekennzeichnet, daß das Ventil auch einen Verteilerfinger (20) aufweist, der im Hauptkörper (10) beweglich angebracht und in der Lage ist, über ein Steuerorgan (25), mit welchem er verbunden ist, die Einlaßöffnung (11) mit der einen oder der anderen Auslaßöffnung (12, 13) durch einen zwischen dem Hauptkörper (10) und dem Finger (20) gebildeten Kreis zu verbinden, wobei der Abschnitt des Kreises, der die Einlaßöffnung (11) mit der Heißwasser-Auslaßöffnung (12) verbindet, auf seiner gesamten Länge einen konstanten Querschnitt aufweist, der im wesentlichen gleich dem Querschnitt der Einlaßöffnung (11) und der Heißwasser-Auslaßöffnung (12) ist.

2. Ventil nach Anspruch 1, dadurch gekennzeichnet, daß der Hauptkörper (10) einen Rückführungsausgang (15) aufweist, der über den Verteilerfinger (20) den Durchfluß der Flüssigkeit von der Einlaßöffnung (11) zum Behälter (1) der Getränkemaschine ermöglicht.

3. Ventil nach Anspruch 1 oder 2, dadurch gekennzeichnet, daß der Verteilerfinger (20) ein Schieber ist, der im Hauptkörper so angebracht ist, daß er durch Drehung axial beweglich ist.

4. Ventil nach einem der Ansprüche 1 bis 3, dadurch gekennzeichnet, daß das Steuerorgan (25) ein mit dem Ende des Verteilerfingers (20) fest verbundenen Knopf ist.

5. Ventil nach einem der Ansprüche 1 bis 4, dadurch gekennzeichnet, daß es ein Antisaugsystem (30) umfaßt.

6. Ventil nach Anspruch 5, dadurch gekennzeichnet, daß das Antisaugsystem ein im Hauptkörper (10) in der Nähe der Dampf-Auslaßöffnung (13) angebrachtes Sicherheitsventil (32) aufweist, das auch als Sicherheitsventil im Fall eines Überdrucks dienen kann.

7. Ventil nach Anspruch 6, dadurch gekennzeichnet, daß das Sicherheitsventil (32) gegen eine Feder (36) elastisch beweglich angebracht ist, um die Sicherheit im Fall eines Überdrucks zu gewährleisten, wobei dem Sicherheitsventil eine Kugel (34) zugeordnet ist, die unter dem im Hauptkörper herrschenden Druck in einer Kammer (33) frei verstellbar angebracht ist, welche in dem Sicherheitsventil (32) angeordnet ist und mit einer Ausströmöffnung versehen ist.

8. Ventil nach Anspruch 6, dadurch gekennzeichnet, daß das Sicherheitsventil (32) von einer unter dem im Hauptkörper herrschenden Druck verformbaren Zunge (40) gebildet ist.

9. Heißgetränkemaschine, insbesondere Kaffeemaschine, die mit einem Ventil nach einem der Ansprüche 1 bis 8 ausgestattet ist.

## Claims

1. A control valve (3) having a plurality of ports for selectively controlling the hot water/steam functions of a hot beverage machine, such as a coffee machine, fitted with a low pressure boiler (4), said valve having a main body (10) with an inlet orifice (11) suitable for communicating with the boiler (4) and two outlet orifices (12, 13) respectively for hot water and for steam, the valve being characterized in that it also comprises a distribution spool (20) mounted to move in the main body (10) and suitable, by means of a control member (25) to which it is connected, for putting the inlet orifice (11) into communication via a circuit formed between the main body (10) and the spool (20) with one or other of the outlet orifices (12, 13), the portion of the circuit connecting the inlet orifice (11) to the hot water outlet orifice (12) having constant section along its entire length substantially equal to the section of the inlet orifice (11) and to the hot water orifice (12).

2. A valve according to claim 1, characterized in that the main body (10) has a recycling outlet (15) enabling liquid to pass from the inlet orifice (11) to the tank (1) of the beverage machine via the distribution spool (20).

3. A valve according to claim 1 or 2, characterized in that the distribution spool (20) is a slider mounted to move axially by being rotated in the main body.

4. A valve according to any one of claims 1 to 3, characterized in that the control member (25) is a knob secured to one end of the distribution spool (20).

5. A valve according to any one of claims 1 to 4, characterized in that it includes an antisiphoning system (30).

6. A valve according to claim 5, characterized in that the antisiphoning system has a safety valve (32) mounted in the main body (10) in the vicinity of the steam outlet orifice (13), said safety valve also acting as a safety valve in the event of excess pressure.

7. A valve according to claim 6, characterized in that the safety valve (32) is mounted to move resiliently against a spring (36) to provide safety in the event of excess pressure, and is associated with a ball (34) mounted to move freely under the effect of the pressure that exists inside the main body (10), within a chamber (33) formed in the safety valve (32), which chamber is provided with an exhaust orifice.

8. A valve according to claim 6, characterized in that the safety valve (32) is formed by a tongue (40) that is deformable under the effect of the pressure that exists inside the main body.

9. A hot beverage machine, in particular a coffee machine, fitted with a valve according to any one of claims 1 to 8.
